Europäisches Patentamt

European Patent Office

Office européen des brevets

(19)

(11) **EP 0 539 346 B1**

(12) **EUROPÄISCHE PATENTSCHRIFT**

(45) Veröffentlichungstag und Bekanntmachung des Hinweises auf die Patenterteilung:
**15.05.1996 Patentblatt 1996/20**

(51) Int. Cl.$^6$: **B60C 11/00**, B60C 19/00

(21) Anmeldenummer: **92890187.5**

(22) Anmeldetag: **01.09.1992**

(54) **Reifenkombination für Fahrzeuge**

Tyre combination for vehicles

Ensemble de pneumatiques pour véhicules

(84) Benannte Vertragsstaaten:
**AT DE FR GB IT**

(30) Priorität: **25.10.1991 AT 2128/91**

(43) Veröffentlichungstag der Anmeldung:
**28.04.1993 Patentblatt 1993/17**

(73) Patentinhaber: **Semperit Reifen Aktiengesellschaft A-2514 Traiskirchen (AT)**

(72) Erfinder: **Lux, Freidrich, Dipl.-Ing. A-2700 Wr. Neustadt (AT)**

(74) Vertreter: **Vinazzer, Edith et al Semperit Reifen Aktiengesellschaft Patentabteilung Wienersdorferstrasse 20-24 A-2514 Traiskirchen (AT)**

(56) Entgegenhaltungen:
**EP-A- 0 420 834         DE-A- 2 536 470
US-A- 4 785 862**

**Beschreibung**

Die vorliegende Erfindung betrifft eine Reifenkombination für Fahrzeuge mit vier unterschiedlichen Radpositionen mit Reifen, die voneinander verschiedene Schallquellen bilden, die unterschiedliche Frequenzspektren liefern, wobei an jeder Radposition ein Reifen mit einem Laufstreifenprofil angeordnet ist, welches zumindest einen Umfangsbereich aufweist, der sich aus einer Vielzahl von in Umfangsrichtung aufeinanderfolgenden Pitches zusammensetzt.

Insbesondere bei Personenkraftwagen werden üblicherweise an sämtlichen vier Radpositionen gleiche Reifen angebracht. In den letzten Jahren wurden jedoch auch Reifen auf den Markt gebracht, die asymmetrisch und drehrichtungsabhängig gestaltete Laufflächenprofile aufweisen, die einen der Radaußenseite und einen der Radinnenseite zugehörigen Profilbereich aufweisen, so daß für die Fahrzeugpositionen links und rechts unterschiedliche Reifen vorgesehen sind. Mit asymmetrisch gestalteten Laufflächenprofilen ist es möglich, mehrere Profileigenschaften besser als mit herkömmlichen und symmetrisch gestalteten Profilen aufeinander abzustimmen. Dabei geht es insbesondere um eine Verbesserung des Aquaplaningverhaltens - mit asymmetrisch gestalteten Laufflächenprofilen kann das Wasserableitvermögen besser beeinflußt werden - und um die Optimierung der Fahr- und Handlingseigenschaften. Asymmetrische und/oder laufrichtungsgebundene Laufflächenprofile sind aus der Patentliteratur in unterschiedlichsten Ausführungsvarianten bekannt. In diesem Zusammenhang wird beispielsweise auf das österreichische Patent Nr. 393107 verwiesen, wo für einen Reifen mit einem asymmetrischen und drehrichtungsgebundenen Laufflächenprofil eine Ausgestaltung vorgeschlagen wird, mit der zusätzlich die Geräuschentwicklung während des Abrollens des Reifens herabgesetzt werden kann. Im Außen- und im Innenabschnitt ist jeweils eine Profilausgestaltung vorgesehen, die sich aus über den Reifenumfang sich wiederholenden, gleichartigen Pitches zusammensetzt, wobei jedoch die Gesamtpitchanzahl im Außenabschnitt kleiner ist als im Innenabschnitt. Eine weitere Variante eines Reifens mit einem asymmetrisch und gleichzeitig drehrichtungsabhängig gestalteten Laufflächenprofil ist beispielsweise aus der DE-OS 3737264 bekannt.

Es gehört ferner zum Stand der Technik und ist auch in der Praxis üblich, das von Fahrzeugluftreifen während des Abrollens initiierte Profilgeräusch dadurch positiv zu beeinflussen, daß für die am Profil aufeinanderfolgenden Profilelemente unterschiedliche Längen gewählt werden, deren absolute Längen und deren Anordnung über den Reifenumfang rechnerisch, beispielsweise mittels Fourieranalyse ermittelt bzw. optimiert wird. Diese Technik ist unter dem Bergritt "Pitchlängenvariation" in Fachkreisen allgemein bekannt. Unter anderem ist es beispielsweise üblich, drei oder fünf Pitches in unterschiedlicher Länge zu wählen und eine rechnerisch optimierte Pitchfolge zu ermitteln. Zu diesem Thema existiert auch eine größere Anzahl von Patentliteratur und es wird beispielsweise auf die US-PS 4327792, die US-PS 4598748, die EP-A 0324605 und die EP-A 0412952 verwiesen. Dabei handelt es sich zumindest zum Teil um bereits technisch ausgereifte Lösungsvorschläge, die am einzelnen Reifen auch sehr gute Ergebnisse bringen.

Eine Reifenkombination gemäß dem Oberbegriff des Anspruches 1 ist aus der DE-A 2536470 bekannt. Die an den vier Radpositionen anzubringenden Reifen besitzen verschieden große Profilelemente, die jedoch bei jedem einzelnen Reifen gleich lang ausgeführt wird.

Ziel der Erfindung ist es nun, eine Reifenkombination für Fahrzeuge zu schaffen, mit der eine noch bessere Minimierung bzw. Optimierung jenes Geräusches erreichbar ist, welches beim Abrollen der Reifen mittelbar oder unmittelbar erzeugt wird.

Gelöst wird die gestellte Aufgabe erfindungsgemäß dadurch, daß die Laufflächenprofile der vier Reifen in diesen Umfangsbereichen entweder gleiche Pitchanzahl, jedoch verschiedene Pitchfolgen oder unterschiedliche Pitchanzahlen und unterschiedliche Pitchfolgen aufweisen.

Die nach der Erfindung vorgeschlagene Reifenkombination, wonach die Reifen am Fahrzeug vier unterschiedliche Schallquellen sind, indem die Laufflächenprofile Umfangsbereiche besitzen, wo entweder gleiche Pitchanzahl jedoch verschiedene Pitchfolgen oder verschiedene Pitchanzahlen und unterschiedliche Pitchfolgen vorgesehen sind, ist es möglich, durch entsprechende Optimierungsmaßnahmen bzw. durch eine entsprechende Anpassung dieser Schallquellen aneinander Überlagerunseffekte in entstehenden Summenfrequenzspektren zu erzielen, so daß einerseits der Summenamplitudenpegel vermindert werden kann und andererseits eine Vergleichmäßigung der Schallabstrahlung erreichbar ist, die sich in einer Verbreiterung des entstehenden Summenfrequenzspektrums äußert, was insbesondere eine positive Auswirkung auf das subjektive Geräuschempfinden zeigt.

Nach einer ersten Ausführungsform der Erfindung verlaufen die Umfangsbereiche über die gesamte Profilbreite, wobei, bezüglich der Fahrtrichtung betrachtet, der Reifen in der Position vorne links die geringste Pitchanzahl aufweist. Diese Maßnahme ist zur zusätzlichen Erzielung eines gleichmäßigen Abriebsbildes sämtlicher am Fahrzeug montierter Reifen günstig.

Dabei ist es vorteilhaft, wenn für die Pitchanzahlen der Laufflächenprofile der in vier unterschiedlichen Positionen am Fahrzeug befindlichen Reifen die Beziehung

$$n_{vl} < n_{hl} < n_{hr} < n_{vr}$$

erfüllt ist, wobei $n_{vl}$ die Pitchanzahl des Laufflächenprofiles des Reifens in der Position vorne links, $n_{hl}$ die Pitchanzahl des Laufflächenprofiles des Reifens in der Position hinten links, $n_{hr}$ die Pitchanzahl des Laufflächenprofiles des Reifens in der Position hinten rechts und $n_{vr}$ die Pitchanzahl des Laufflächenprofiles des Reifens in der Position vorne rechts ist.

Bei einer weiteren bevorzugten Ausführungsform der Erfindung ist vorgesehen, daß das Laufflächenprofil jedes Reifens einen Umfangsbereich aufweist, dessen Pitches innerhalb einer Pitchfolge angeordnet sind, die sich von der Pitchfolge eines zweiten Umfangsbereiches des Laufllächenprofiles des selben Reifens unterschiedet, wobei diese Umfangsbereiche sämtlicher Reifen voneinander verschiedene Pitchfolgen aufweisen.

Dabei ist es zur Beeinflussung des Summenfrequenzspektrums günstig, wenn diese Umfangsbereiche auch sämtlich unterschiedliche Pitchanzahlen aufweisen.

Bei einer weiteren Ausführungsform stimmen die Pitchanzahlen in den einzelnen Umfangsbereichen pro Reifen, für Reifen auf gleicher Achse oder für Reifen auf gleicher Fahrzeugseite überein.

Die Erfindung betrifft ferner ein Fahrzeug mit einer Reifenkombination nach zumindest einem der Patentansprüche.

Weitere Merkmale, Vorteile und Einzelheiten der Erfindung werden nun anhand der Zeichnung, die einige Ausführungsbeispiele der erfindungsgemäßen Reifenkombination für Fahrzeuge veranschaulicht, näher beschrieben. Die in den Figuren 1 bis 3 dargestellten Varianten zeigen dabei schematisch die Anordnung von jeweils vier unterschiedlichen Reifen an einem Fahrzeug, Fig. 4 und Fig. 5 zeigen in schematischer Darstellung Frequenzspektren von erfindungsgemäßen Reifenkombinationen.

Vorab werden einige Begriffe näher erläutert, die für das Verständnis der vorliegenden Erfindung von Bedeutung sind und auf die in der folgenden Beschreibung nicht mehr näher eingegangen wird.

Ein "Pitch" ist ein Profilabschnitt der sich, über den Reifenumfang betrachtet, mehrmals wiederholt. Ein Pitch kann über die gesamte Breite eines Laufflächenprofiles verlaufen, so daß sich dieses, in Umfangsrichtung betrachtet, aus einer Aneinanderreihung von insbesondere gleichartigen Pitches zusammensetzt. Ein Laufflächenprofil kann sich jedoch auch aus Umfangsbereichen oder Umfangsstreifen, worunter beispielsweise eine in Umfangsrichtung verlaufende Blockreihe verstanden wird, eventuell auch kombiniert mit Umfangsbereichen, wo keine Profilierung gewählt wird, zusammensetzen. Jeder profilierte Umfangsbereich setzt sich somit aus insbesondere gleichartigen Pitches zusammen.

Eine "Pitchlänge" ist die in Umfangsrichtung gemessene Länge eines einzelnen Pitches. Dabei haben im allgemeinen nicht sämtliche Pitches voneinander unterschiedliche Längen, sondern es werden beispielsweise drei oder fünf Pitches mit verschiedenen Längen gewählt.

Die "Pitchanzahl" bezeichnet die Gesamtanzahl der über den Reifenumfang bzw. innerhalb eines Umfangsbereiches angeordneten Pitches.

Eine "Pitchfolge" kennzeichnet die Art und Weise, wie die in Umfangsrichtung angeordneten Pitches aneinandergereiht sind. So kann sich beispielsweise das Laufflächenprofil eines Reifens aus Pitches mit drei unterschiedlichen Umfangslängen (Pitchlängen) zusammensetzen, deren Abfolge über den Reifenumfang insbesondere so festgelegt wird, daß das Abrollgeräusch des Reifens möglichst gering gehalten wird.

In den Zeichnungsfiguren kennzeichnen die Positionen "vorne links", "vorne rechts", "hinten links" und "hinten rechts" jeweils die Reifenposition am Fahrzeug relativ zur Fahrtrichtung, die mit dem Pfeil F bezeichnet ist. Dabei ist die Position "vorne links" mit vl, die Position "vorne rechts" mit vr, die Position "hinten links" mit hl und die Position "hinten rechts" mit hr abgekürzt.

Bei den in den Zeichnungsfiguren dargestellten Ausführungsbeispielen sind an den vier Radpositionen unterschiedliche Reifen vorgesehen. Die vorliegende Erfindung umfaßt jedoch, wie in der Beschreibungseinleitung ausgeführt, auch Reifenkombinationen, wo zwei oder drei der an unterschiedlichen Positionen am Fahrzeug angeordneten reifen voneinander verschieden sind bzw. unterschiedliche Schallquellen bilden.

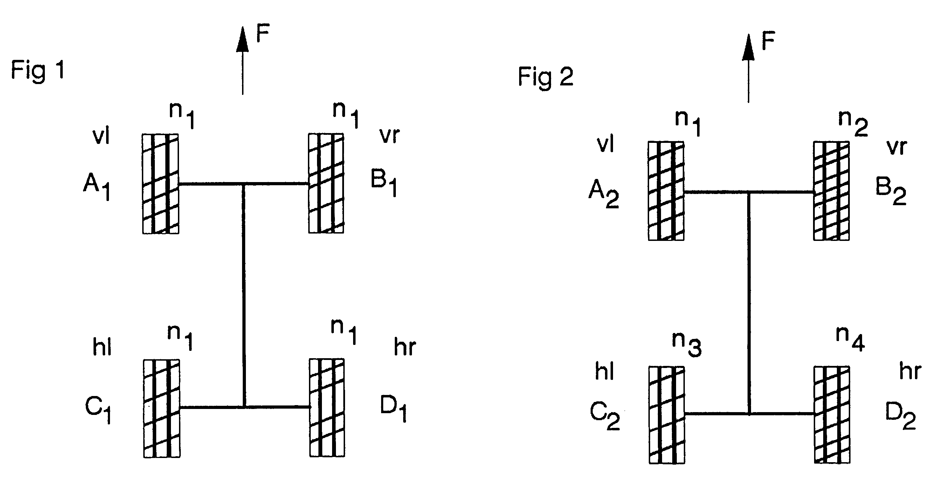

Beim Ausführungsbeispiel gemäß Fig. 1 haben die Reifen an sämtlichen vier Positionen untereinander gleichartige Profilausgestaltungen mit über die gesamte Laufflächenbreite verlaufenden Pitches bzw. Pitchgrenzen. Jedes Profil besitzt die gleiche Pitchanzahl $n_1$, die Pitchfolgen der Laufflächenprofile sämtlicher Reifen unterscheiden sich jedoch voneinander, so daß ein Reifen die Pitchfolge $A_1$, der zweite die Pitchfolge $B_1$, der dritte die Pitchfolge $C_1$ und der vierte die Pitchfolge $D_1$ aufweist.

Bei einer gesondert nicht dargestellten Abwandlung dieses Ausführungsbeispieles können jeweils zwei Reifen paarweise, und zwar entweder jeweils die beiden in den Positionen vl und vr bzw. die in den Positionen hl und hr angeordneten Reifen oder die in den Positionen vl und hl bzw. vr und hr am Fahrzeug angeordneten Reifen, jeweils mit untereinander gleicher Pitchanzahl versehene Laufflächenprofile aufweisen, die sich jedoch von der Pitchanzahl des zweiten Reifenpaares, wo untereinander wiederum Gleichheit in der Pitchanzahl vorliegt, unterscheidet.

Bei einer weiteren, in Fig. 2 dargestellten Variante sind an sämtlichen vier Radpositionen Reifen angeordnet, deren Profile nicht nur unterschiedliche Pitchfolgen $A_2$, $B_2$, $C_2$, $D_2$ sondern auch unterschiedliche Pitchanzahlen $n_1$, $n_2$, $n_3$, $n_4$ aufweisen.

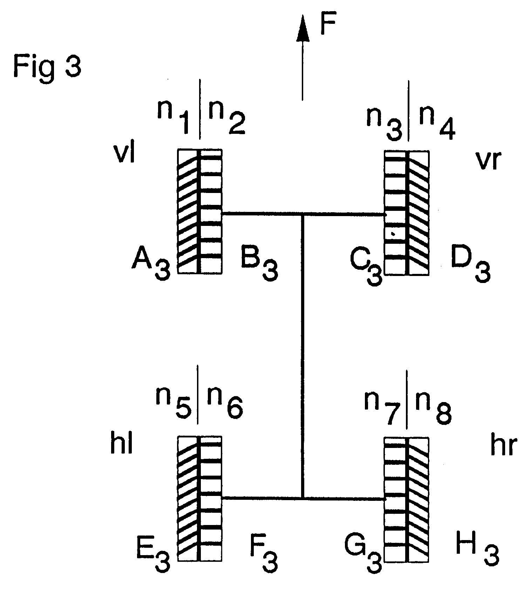

Fig. 3 zeigt die Anordnung von Reifen an einem Fahrzeug, welche asymmetrische Laufflächenprofile aufweisen. Reifen mit asymmetrischen Laufflächenprofilen sind an sich bekannt und es wird diesbezüglich auf die Beschreibungseinleitung verwiesen, wo Literaturstellen zu bekannten Ausführungsformen angeführt sind. Betrachtet man nun die beiden Radpositionen vl und vr, so ist in der Position vl ein Reifen angeordnet, der in seiner linken, in diesem Fall äußeren Laufflächenhälfte einen Umfangsbereich aufweist, dessen Pitches innerhalb einer Pitchfolge $A_3$ angeordnet sind. Die zugehörige Pitchanzahl beträgt $n_1$. In der inneren Laufflächenhälfte ist ein Umfangsbereich vorgesehen, dessen Pitches innerhalb einer Pitchfolge $B_3$ angeordnet sind, die zugehörige Pitchanzahl beträgt $n_2$. Der in der Radposition vr vorgesehene Reifen hat in seiner inneren Profilhälfte einen Umfangsbereich mit Pitches innerhalb einer Pitchfolge $C_3$ (zugehörige Pitchanzahl $n_3$) und in seiner äußeren Profilhälfte einen Umfangsbereich mit Pitches innerhalb einer Pitchfolge $D_3$ (zugehörige Pitchanzahl $n_4$). In der Radposition hl befindet sich ein Reifen, dessen äußerer Laufflächenbereich einen Umfangsbereich mit einer Pitchfolge $E_3$ (Pitchanzahl $n_5$), und in seiner inneren Laufflächenhälfte einen Umfangsbereich mit einer Pitchfolge $F_3$ (Gesamtpitchanzahl $n_6$) aufweist. Auch in der Position hr befindet sich ein Reifen, der sich bezüglich Pitchfolgen und Pitchanzahl von allen anderen unterscheidet und somit in der inneren Laufflächenhälfte eine Pitchfolge $G_3$ (Pitchanzahl $n_7$) und in der rechten Laufflächenhälfte einen Umfangsbereich mit einer Pitchfolge $H_3$ (Pitchanzahl $n_8$) aufweist.

Bei einer gegenüber Fig. 3 vereinfachten, gesondert nicht dargestellten Variante können die Reifen Umfangsbereiche mit jeweils unterschiedlichen Pitchfolgen $A_3$, $B_3$, $C_3$, $D_3$, $E_3$, $F_3$, $G_3$, $H_3$ aufweisen, wobei die Pitchanzahlen in sämtlichen dieser Umfangsbereiche gleich sind. Weitere Varianten, die nicht der gesonderten Erörterung bedürfen können vorsehen, daß die Pitchanzahlen in den einzelnen Umfangsbereichen pro Reifen, oder pro Achsposition oder pro Fahrzeugseite übereinstimmen.

Andere Kombinationen, wo zumindest teilweise eine Übereinstimmung bezüglich der gewählten Pitchfolgen und/oder Pitchanzahlen erfolgt sind denkbar und aufgrund der obigen Ausführungen dem Fachmann soweit verständlich, daß keine gesonderte Beschreibung erforderlich ist.

Bei einer Reifenkombination mit asymmetrischen Laufflächenprofilen ist es aus Stabilitätsgründen günstig, wenn jeweils in jenem Laufflächenbereich, der der Radaußenseite zugewandt ist, ein Profilumfangsbereich vorgesehen ist, in welchem die Pitchanzahl geringer ist, als in einem Profilumfangsbereich, der in jenem Laufflächenbereich verläuft, der der Radinnenseite zugeordnet ist.

Zurückkommend auf das Ausführungsbeispiel gemäß Fig. 2 wird nun eine konkrete Variante erläutert. Die nachstehende Tabelle veranschaulicht dieses Ausführungsbeispiel:

| Position am Fahrzeug: | Pitchfolge: | Pitchanzahl: |
|---|---|---|
| vl | $A_2$ | $n_1 = n_{vl} = 51$ |
| vr | $B_2$ | $n_2 = n_{vr} = 63$ |
| hl | $C_2$ | $n_3 = n_{hl} = 52$ |
| hr | $D_2$ | $n_4 = n_{hr} = 55$ |

Es hat sich als günstig erwiesen, wenn in der Position vl jener Reifen angeordnet ist, dessen Laufflächenprofil von allen vier Reifen die geringste Pitchanzahl aufweist. Von Vorteil ist es ferner, wenn zumindest eine der folgenden Bedingungen erfüllt ist:

$$n_{vl} + n_{vr} > n_{hl} + n_{hr}$$

$$n_{vr} > n_{vl}$$

$$n_{hr} > n_{hl}$$

$$n_{vl} < n_{hl} < n_{hr} < n_{vr}$$

$$(n_{hl} - n_{vl}) = (n_{hr} - n_{hl}) = (n_{vr} - n_{hr})$$

Die kleinste Pitchanzahl $n_{min}$ sollte 45 Pitches nicht unterschreiten, die größte Pitchanzahl $n_{max}$ sollte 75 Pitches nicht überschreiten.

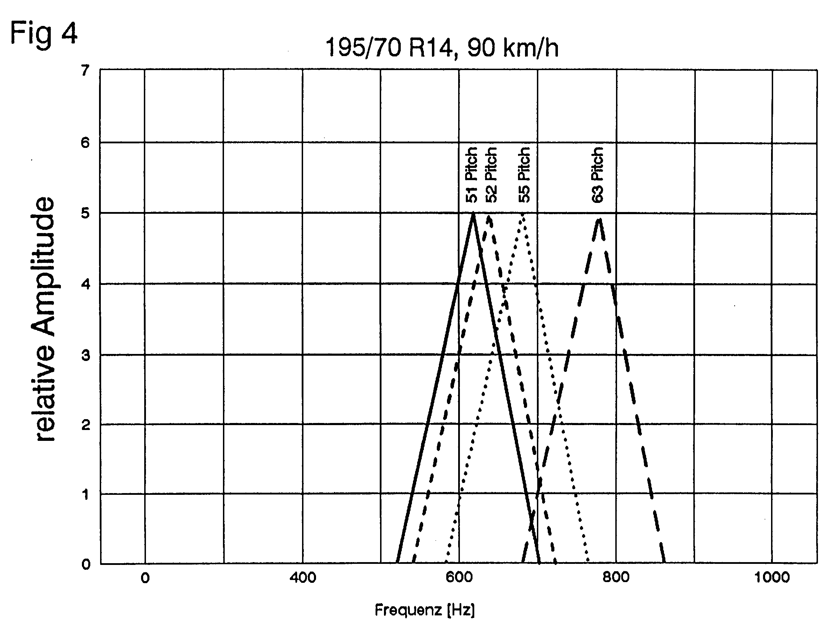

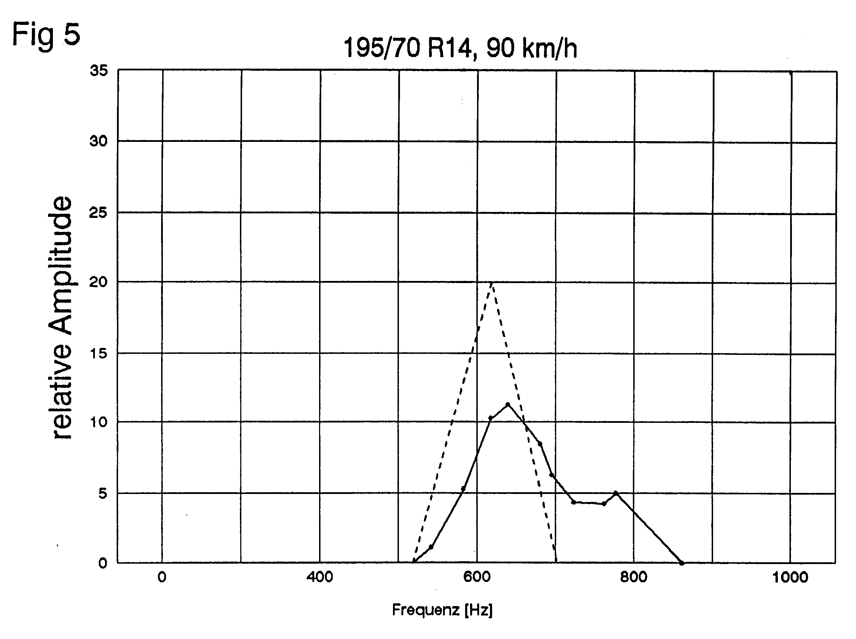

Die Zeichnungsfiguren 4 und 5 zeigen schematisch und in vereinfachter Darstellung rechnerisch ermittelte Frequenzspektren unter Heranziehung von Reifen der Dimension 195/70R14, Geschwindigkeit 90 km/h. Für die Ermittlung des Frequenzspektrums gemäß Fig. 4 wurde eine Reifenkombination herangezogen, wie sie in obiger Tabelle enthalten ist. Dabei ist für jede Reifenposition das Amplitudenmaximum der ersten Blockharmonischen (ersten Pitchharmonischen) dargestellt. Die vier unterschiedlichen Reifen erzeugen vier unterschiedliche Frequenzpeaks. Fig. 5 zeigt mit durchgezogener Linie das durch die vier unterschiedlichen Reifen entstehende Summenspektrum der ersten Blockharmonischen im Vergleich zu einer Reifenkombination, wo die Reifen in sämtlichen Radpositionen übereinstimmen. Die strichlierte Linie in Fig. 5 zeigt dabei für vier gleiche Reifen (gemäß Position vl) das rechnerisch ermittelte Summenspektrum, welches aus einem ausgeprägten Peak mit hoher relativer Amplitude besteht.

Bei einer Reifenkombination mit asymmetrischen Laufflächenprofilen ist es aus Stabilitätsgründen günstig, wenn jeweils in jenem Laufflächenbereich, der der Radaußenseite zugewandt ist, ein Profilumfangsbereich vorgesehen ist, in welchem die Pitchanzahl geringer ist, als in einem Profilumfangsbereich, der in jenem Laufflächenbereich verläuft, der der Radinnenseite zugeordnet ist.

Die vorliegende Erfindung umfaßt auch Reifenkombinationen mit Reifen, die Laufflächenprofile mit jeweils einer größeren Anzahl von Profilumfangsbereichen, beispielsweise vier oder fünf, aufweisen.

Erwähnt sei schließlich, daß bei erfindungsgemäßen Reifenkombinationen an allen Radpositionen bevorzugt Reifen angeordnet sind, deren Profile geometrisch gleichartig sind und die bezüglich ihrer Dimension übereinstimmen.

## Patentansprüche

1. Reifenkombination für Fahrzeuge mit vier unterschiedlichen Radpositionen mit Reifen, die voneinander verschiedene Schallquellen bilden, die unterschiedliche Frequenzspektren liefern, wobei an jeder Radposition ein Reifen mit einem Laufstreifenprofil angeordnet ist, welches zumindest einen Umfangsbereich aufweist, der sich aus einer Vielzahl von in Umfangsrichtung aufeinanderfolgenden Pitches zusammensetzt, dadurch gekennzeichnet, daß die Laufflächenprofile der vier Reifen in diesen Umfangsbereichen entweder gleiche Pitchanzahl ($n_1$), jedoch verschiedene Pitchfolgen ($A_1$, $B_1$, $C_1$, $D_1$) oder unterschiedliche Pitchanzahlen ($n_1$, $n_2$, $n_3$, $n_4$) und unterschiedliche Pitchfolgen ($A_2$, $B_2$, $C_2$, $D_2$) aufweisen.

2. Reifenkombination nach Anspruch 1, dadurch gekennzeichnet, daß diese Umfangsbereiche über die gesamte Profilbreite verlaufen, wobei, bezüglich der Fahrtrichtung betrachtet, der Reifen in der Position vorne links die geringste Pitchanzahl aufweist.

3. Reifenkombination nach Anspruch 1 oder 2, dadurch gekennzeichnet, daß für die Pitchanzahlen der Laufflächenprofile der in vier unterschiedlichen Positionen am Fahrzeug befindlichen Reifen die Beziehung $n_{vl} < n_{hl} < n_{hr} < n_{vr}$ erfüllt ist, wobei $n_{vl}$ die Pitchanzahl des Laufflächenprofiles des Reifens in der Position vorne links, $n_{hl}$ die Pitchanzahl des Laufflächenprofiles des Reifens in der Position hinten links, $n_{hr}$ die Pitchanzahl des Laufflächenprofiles des Reifens in der Position hinten rechts und $n_{vr}$ die Pitchanzahl des Lafflächenprofiles des Reifens in der Position vorne rechts ist.

4. Reifenkombination nach Anspruch 1, dadurch gekennzeichnet, daß das Laufflächenprofil jedes Reifens einen Umfangsbereich aufweist, dessen Pitches innerhalb einer Pitchfolge angeordnet sind, die sich von der Pitchfolge eines zweiten Umfangsbereiches des Laufflächenprofiles des selben Reifens unterschiedet, wobei diese Umfangsbereiche sämtlicher Reifen voneinander verschiedene Pitchfolgen ($A_3$, $B_3$, $C_3$, $D_3$, $E_3$, $F_3$, $G_3$, $H_3$) aufweisen.

5. Reifenkombination nach Anspruch 4, dadurch gekennzeichnet, daß diese Umfangsbereiche auch sämtlich unterschiedliche Pitchanzahlen ($n_1$, $n_2$, $n_3$, $n_4$, $n_5$, $n_6$, $n_7$, $n_8$) aufweisen.

6. Reifenkombination nach Anspruch 4, dadurch gekennzeichnet, daß die Pitchanzahlen in den einzelnen Umfangsbereichen pro Reifen, für Reifen auf gleicher Achse oder für Reifen auf gleicher Fahrzeugseite übereinstimmen.

7. Reifenkombination nach einem der Ansprüche 1 bis 6, dadurch gekennzeichnet, daß die Reifen an sämtlichen Radpositionen geometrisch gleichartig gestaltete Laufstreifenmuster aufweisen.

8. Fahrzeug mit einer Reifenkombination nach einem oder mehreren der Ansprüche 1 bis 7.

## Claims

1. Tyre combination for vehicles having four different wheel positions with tyres which form sources of sound which differ from one another and supply various frequency spectra, a tyre being disposed at each wheel position with a tread strip profile which has at least one circumferential region which comprises a plurality of pitches, which succeed one another when viewed with respect to the circumferential direction, characterised in that the tread surface profiles of the four tyres in these circumferential regions have either an idential pitch number ($n_1$), but different pitch sequences ($A_1$, $B_1$, $C_1$, $D_1$), or different pitch numbers ($n_1$, $n_2$, $n_3$, $n_4$) and different pitch sequences ($A_2$, $B_2$, $C_2$, $D_2$).

2. Tyre combination according to claim 1, characterised in that these circumferential regions extend over the entire profile width, whereby, when viewed with respect to the direction of travel, the tyre has the smallest pitch number in the front left-hand position.

3. Tyre combination according to claim 1 or 2, characterised in that the formula $n_{vl} < n_{hl} < n_{hr} < n_{vr}$ is satisfied for the pitch numbers of the tread surface profiles of the tyres situated on the vehicle in four different positions, $n_{vl}$ being the pitch number of the tread surface profile of the tyre in the front left-hand position, $n_{hl}$ being the pitch number of the tread surface profile of the tyre in the rear left-hand position, $n_{hr}$ being the pitch number of the tread surface profile of the tyre in the rear right-hand position, and $n_{vr}$ being the pitch number of the tread surface profile of the tyre in the front right-hand position.

4. Tyre combination according to claim 1, characterised in that the tread surface profile of each tyre has a circumferential region, the pitches of which are disposed within a pitch sequence, which differs from the pitch sequence of a second circumferential region of the tread surface profile of the same tyre, these circumferential regions of all of the tyres having pitch sequences ($A_3$, $B_3$, $C_3$, $D_3$, $E_3$, $F_3$, $G_3$, $H_3$) which differ from one another.

5. Tyre combination according to claim 4, characterised in that all of these circumferential regions also have different pitch numbers ($n_1$, $n_2$, $n_3$, $n_4$, $n_5$, $n_6$, $n_7$, $n_8$).

6. Tyre combination according to claim 4, characterised in that the pitch numbers in the individual circumferential regions per tyre are identical for tyres on the same axle or for tyres on the same side of the vehicle.

7. Tyre combination according to one of claims 1 to 6, characterised in that the tyres at all of the wheel positions have tread strip patterns which are geometrically identical.

8. Vehicle having a tyre combination according to one or more of claims 1 to 7.

**Revendications**

1. Ensemble de pneumatiques pour véhicules, comprenant quatre emplacements différents de roues munies de pneumatiques qui forment des sources sonores différant les unes des autres et délivrant des spectres de fréquence différents, ensemble dans lequel est disposé, à chaque emplacement de roue, un pneumatique doté d'un profil de bande de roulement comportant au moins une zone périphérique se composant d'un grand nombre de pas se succédant mutuellement dans le sens périphérique, caractérisé par le fait que les profils des surfaces de roulement des quatre pneumatiques présentent, dans ces zones périphériques, soit un même nombre de pas ($n_1$), mais toutefois différentes successions de pas ($A_1$, $B_1$, $C_1$, $D_1$), soit des nombres de pas différents ($n_1$, $n_2$, $n_3$, $n_4$) et des successions de pas différentes ($A_2$, $B_2$, $C_2$, $D_2$).

2. Ensemble de pneumatiques selon la revendication 1, caractérisé par le fait que ces zones périphériques s'étendent sur toute la largeur des profils, le pneumatique, occupant la position antérieure de gauche observé par rapport à la direction du déplacement, présentant le nombre de pas le plus faible.

3. Ensemble de pneumatiques selon la revendication 1 ou 2, caractérisé par la fait que, pour les nombres de pas des profils des surfaces de roulement des pneumatiques occupant quatre positions différentes sur le véhicule, il est satisfait à la relation $n_{vl} < n_{hl} < n_{hr} < n_{vr}$, dans laquelle $n_{vl}$ est le nombre de pas du profil de la surface de roulement du pneumatique occupant la position antérieure de gauche, $n_{hl}$ est le nombre de pas du profil de la surface de roulement du pneumatique occupant la position postérieure de gauche, $n_{hr}$ est le nombre de pas du profil de la surface de roulement du pneumatique occupant la position postérieure de droite, et $n_{vr}$ est le nombre de pas du profil de la surface de roulement du pneumatique occupant la position antérieure de droite.

4. Ensemble de pneumatiques selon la revendication 1, caractérisé par le fait que le profil de la surface de roulement de chaque pneumatique présente une zone périphérique dont les pas se trouvent à l'intérieur d'une succession de pas différant de la succession des pas d'une seconde zone périphérique du profil de la surface de roulement du même pneumatique, ces zones périphériques de tous les pneumatiques comportant des successions de pas ($A_3$, $B_3$, $C_3$, $D_3$, $E_3$, $F_3$, $G_3$, $H_3$) différant les unes des autres.

5. Ensemble de pneumatiques selon la revendication 4, caractérisé par le fait que ces zones périphériques présentent aussi, globalement, des nombres de pas différents ($n_1$, $n_2$, $n_3$, $n_4$, $n_5$, $n_6$, $n_7$, $n_8$).

6. Ensemble de pneumatiques selon la revendication 4, caractérisé par la fait que les nombres de pas concordent dans les zones périphériques individuelles pour chaque pneumatique, pour des pneumatiques montés sur un même essieu, ou pour des pneumatiques situés sur un même côté du véhicule.

7. Ensemble de pneumatiques selon l'une des revendications 1 à 6, caractérisé par le fait que les pneumatiques possédent, à tous les emplacements de roues, des dessins de bandes de roulement présentant des configurations géométriquement de même type.

8. Véhicule muni d'un ensemble de pneumatiques selon l'une ou plusieurs des revendications 1 à 7.

Fig 1

Fig 2

Fig 3

$n_1$ $n_2$ vl

$n_3$ $n_4$ vr

$A_3$ $B_3$

$C_3$ $D_3$

F

$n_5$ $n_6$ hl

$n_7$ $n_8$ hr

$E_3$ $F_3$

$G_3$ $H_3$

Fig 4

195/70 R14, 90 km/h

relative Amplitude

51 Pitch
52 Pitch
55 Pitch
63 Pitch

Frequenz [Hz]

EP 0 539 346 B1

Fig 5

195/70 R14, 90 km/h

relative Amplitude

35 — 30 — 25 — 20 — 15 — 10 — 5 — 0

Frequenz [Hz]

0   200   400   600   800   1000